# EUROPEAN PATENT APPLICATION

(11) **EP 4 696 205 A1**
(43) Date of publication of application: **18.02.2026**
(21) Application number: 25150416.3
(22) Date of filing: 07.01.2025
(51) Int. Cl.: A47J 47/02, B65D 43/20

(54) **FOOD STORAGE COVER**

(30) Priority: 13.08.2024 CN 202421957060 U; 15.11.2024 CN 202422792599 U
(71) Applicant: Zhongshan Jiabao Daily Necessities Co., Ltd, Zhongshan 528400 (CN)
(72) Inventor: CAI, Shengbin, Zhongshan 528400 (CN)
(74) Representative: Plavsa, Olga

(57) **Abstract**

The invention provides a food storage cover comprising a cover frame, in which a through-hole is formed, an end of the cover frame extends toward the through-hole to form a fixing cover, an opening is formed between the fixing cover and another end, a moving cover is provided at the opening, which is configured to move close to or away from the fixing cover. An inner wall of the cover frame protrudes to form a protruding portion, a chute is provided on an outer wall of the moving cover. When the moving cover is moved to open or close the opening, the protruding portion cooperates with the chute for guiding the moving cover to slide, so that the moving cover can slide in a certain direction, ensuring the smoothness when opening and closing, and avoiding deviations in upward and downward directions when opening and closing the moving cover.

## Description

### TECHNICAL FIELD

The present invention relates to the technical field of storage covers, and in particular to a food storage cover.

### BACKGROUND

In the existing technology, a block formed at a moving cover is cooperated with a frame wall of a cover frame, however, there is no chute set at the frame wall, so the moving cover is easy to slip off during its movement, or the block is too tightly cooperated with the frame wall of the cover frame, resulting in the risk of difficult to open the moving cover, which is not convenient for users to use.

### SUMMARY

The present invention solves one of the problems existing in the existing related technologies to a certain extent. For this purpose, one of the purposes of the present invention is to provide a food storage cover to ensure the smoothness when opening or closing, thus avoiding deviations in the upper and lower directions when the moving cover is opened and closed.

The above purpose is achieved through the following technical solutions.

A food storage cover, comprises a cover body, wherein the cover body includes a cover frame, a through-hole is formed inside the cover frame, an edge of an end of the cover frame extends toward a direction of the through-hole to form a fixing cover, an opening is formed between the fixing cover and an edge of the other edge of the cover frame, and a moving cover is provided on the opening. The moving cover can move close to or away from the fixing cover in the cover frame for opening or closing the opening, a protruding portion protrudes from the cover frame, a chute is provided on an outer wall of the moving cover, and the protruding portion protrudes into the chute; when the moving cover opens or closes the opening, the protruding portion is cooperated with the chute for guiding the moving cover to slide.

As a further improvement of the present, an opening stopper is provided at the cover frame, the moving cover protrudes outward to form a protruding edge, when the moving cover opens the opening, the protruding edge abuts against the opening stopper, so as to limit the movement distance of the moving cover.

As a further improvement of the present, a closing stopper is provided at the cover frame, and the protruding edge is cooperated with the closing stopper; when the moving cover closes the opening, the protruding edge abuts against the closing stopper, so as to limit the movement distance of the moving cover.

As a further improvement of the present, an end of the fixing cover near the opening extends upward to form a first abutting edge, an end of the moving cover near the fixing cover extends downward to from s second abutting edge, and the first abutting edge is arranged in cooperation with the second abutting edge.

As a further improvement of the present, an extending edge is formed by extending downward from the opening, a first clamping portion is formed by extending upward from the moving cover, and the first clamping portion is engaged with an outer wall of the extending edge.

As a further improvement of the present invention, a second clamping portion is formed by extending upward from the moving cover, and the second clamping portion is cooperated with an inner wall of the extending edge.

As a further improvement of the present invention, an inner wall of an end of the opening away from the fixing cover extends toward a direction of the opening to form a sealing edge.

As a further improvement of the present invention, an end of the moving cover away from the fixing cover extends downward to form a forcing portion.

As a further improvement of the present, the protruding portion is a protruding strip, and the protruding strip is arranged and extended along the opening and closing directions of the moving cover.

As a further improvement of the present, the cover body further includes an installation structure, the installation structure is arranged on the cover frame, and the installation structure is used for connecting the cover frame with the storage box.

As a further improvement of the present, the installation structure includes a fastening assembly and a matching assembly, the fastening assembly is cooperated with the matching assembly for fastening installation, and a fastening slot is formed between the fastening assembly and the matching assembly.

As a further improvement of the present, the fastening assembly includes a plurality of fasteners, the fasteners are located at outer edges of the cover frame, and fastening portions of the fasteners extend the direction of the fastening slot.

As a further improvement of the present, the matching assembly includes a protruding member, the protruding member protrudes from an inner edge of the cover frame toward a direction of the fastening slot.

Compared with the prior art, the present invention has at least the following beneficial effects.

The present invention provides a food storage cover, the moving cover can move close to or away from the fixing cover in the cover frame for opening or closing the opening, so the food can be taken and placed by opening the opening, and a sealing effect can be achieved by closing the opening. Besides, the chute is provided on the moving cover and cooperated with the protruding portion at the cover frame to guide the moving cover in the process of opening or closing, so that the moving cover can slide in a certain direction, ensuring the smoothness when opening and closing, and avoiding deviations in upward and downward directions when opening and closing the moving cover.

### BRIEF DESCRIPTION OF THE DRAWINGS

Fig. 1 is a structural schematic view of a food storage cover in the embodiment;
Fig. 2 is a cross-sectional view of the food storage cover in the embodiment;
Fig. 3 is an enlarged view of part A in Fig. 2;
Fig. 4 is a schematic view of the food storage cover in a closed state in the embodiment;
Fig. 5 is an enlarged view of part C in Fig. 4;
Fig. 6 is a schematic view of the food storage cover in an open state in the embodiment;
Fig. 7 is an enlarged view of part B in Fig. 6;
Fig. 8 is another schematic view of the food storage cover in the open state in the embodiment;
Fig. 9 is a structural schematic view of a cover frame and a fixing cover in the embodiment;
Fig. 10 is a structural schematic view of a moving cover in the embodiment;
Fig. 11 is an enlarged view of part D in Fig. 10;
Fig. 12 is another structural schematic view of the moving cover in the embodiment;
Fig. 13 is a partial schematic view of the food storage cover in the embodiment;
Fig. 14 is another structural schematic view of the food storage cover in the embodiment;
Fig. 15 is another structural schematic view of the food storage cover in the embodiment.
Fig. 16 is another structural schematic view of the food storage cover in the embodiment.

### DETAILED DESCRIPTION OF EMBODIMENTS

The present invention is illustrated by the following embodiments, but the present invention is not limited by these embodiments. Modifications to the specific embodiments of the present invention or equivalent replacements of some technical features, without departing from the spirits of the present invention, should be included in the scope of the technical solution for which protection is requested in the present invention.

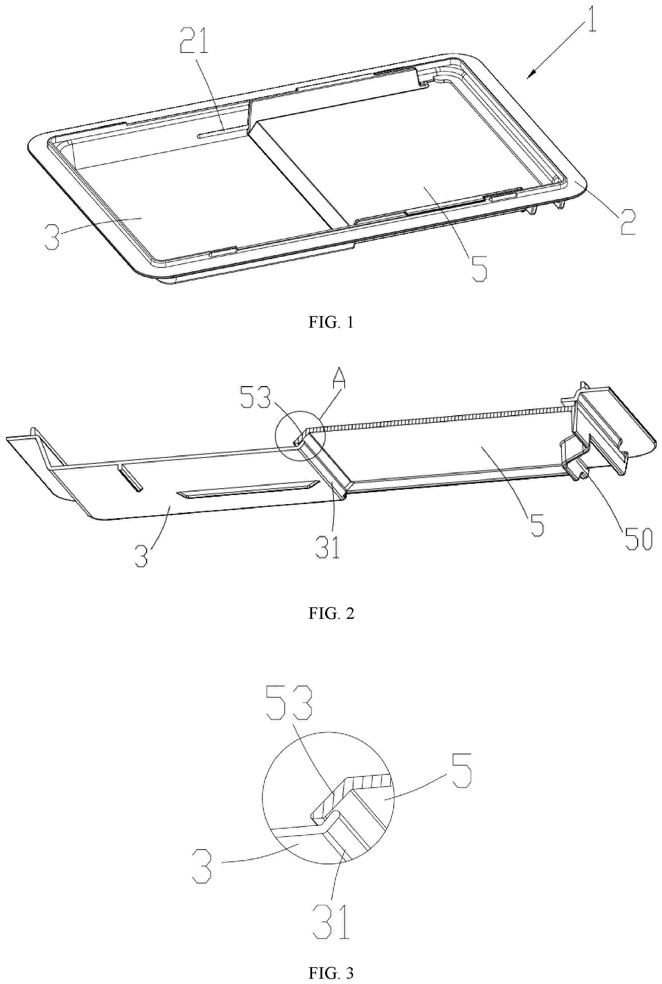

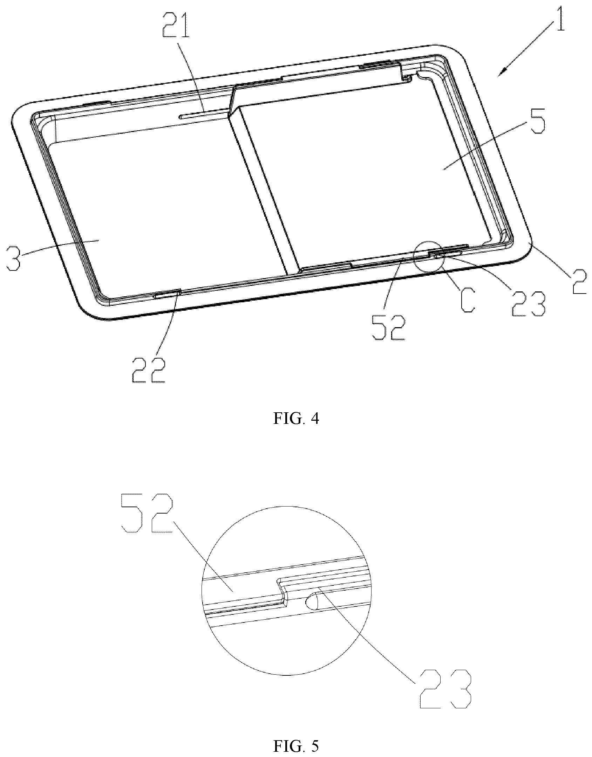

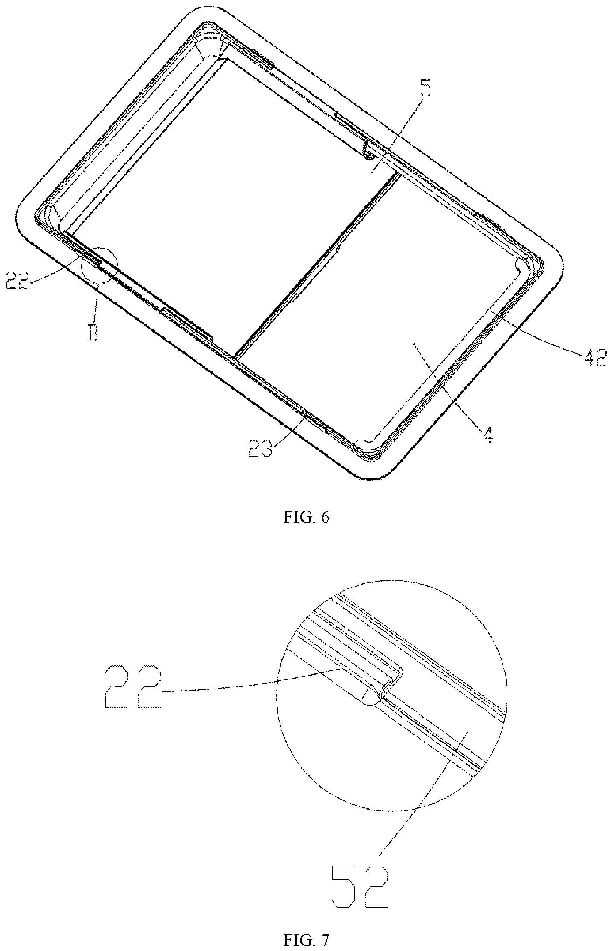

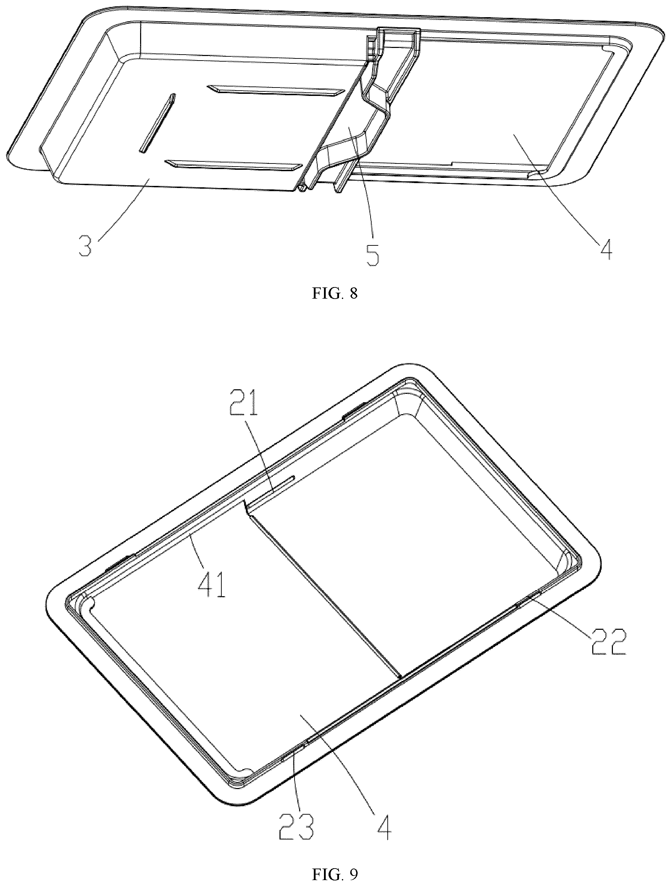

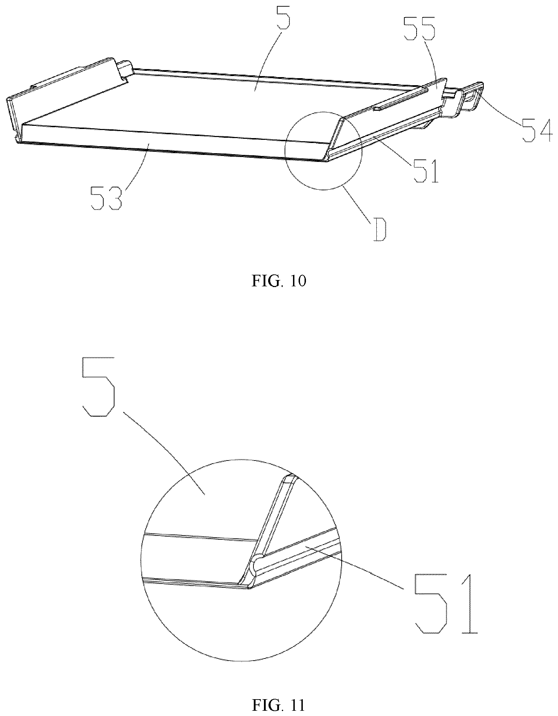

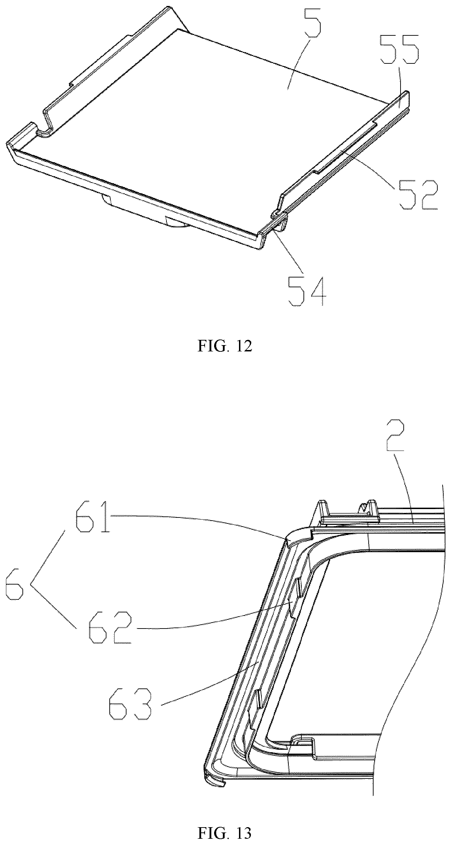

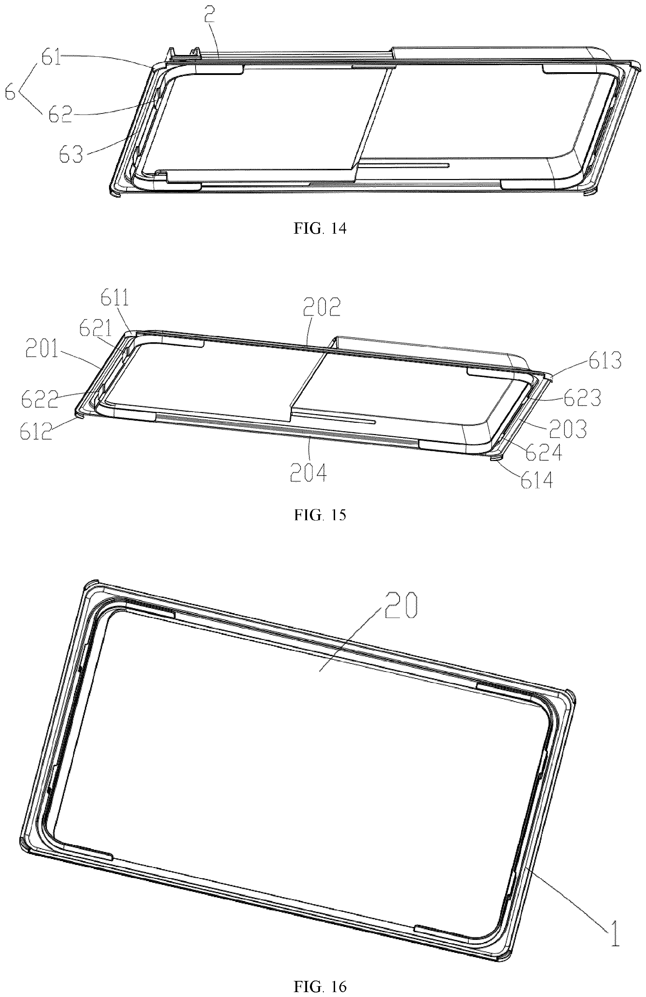

As shown in Figs. 1-16, a food storage cover comprises a cover body 1, wherein the cover body 1 includes a cover frame 2, a through-hole 20 is formed in the cover frame 2, an edge of an end of the cover frame 2 extends toward a direction of the through-hole 20 to form a fixing cover 3, and an opening 4 is formed between the fixing cover 3 and an edge of the other end of the cover frame 2. A moving cover 5 is provided on the opening 4, and the moving cover 5 can move close to or away from the fixing cover 3 in the cover frame 2 to open or close the opening 4. An inner wall of an end of the cover frame 2 close to the fixing cover 3 protrudes to form a protruding portion 21, a chute 51 is provided on an outer wall of the moving cover 5, and the protruding portion 21 protrudes into the chute 51. When the moving cover 5 opens or closes the opening 4, the protruding portion 21 is cooperated with the chute 51 for guiding the moving cover 5 to slide, so as to avoid deviations in upward and downward directions when opening and closing the moving cover 5.

The present invention provides a food storage cover, the moving cover 5 can move close to or away from the fixing cover 3 in the cover frame 2 to open or close the opening 4, so that the food can be taken and placed by opening the opening 4, and the sealing effect can be achieved by closing the opening 4. Besides, the chute 51 is provided on the moving cover 5 for cooperating with the protruding portion 21 at the cover frame 2 to guide the moving cover 5 in the process of opening or closing, so as to ensure that the moving cover 5 can slide in a certain direction and ensure the smoothness when opening or closing.

An opening stopper 21 is provided at an end of the cover frame 2 close to the fixing cover 3, and the moving cover 5 protrudes outward to form a protruding edge 52; when the moving cover 5 opens the opening 4, the protruding edge 52 abuts against the opening stopper 21, so as to limit the movement distance of the moving cover 5.

In this embodiment, a middle portion of a side edge of the moving cover 5 extends outward to form a protruding edge 52, and the protruding edge 52 is lapped on the cover frame 2, which can effectively bear the moving cover 5.

A closing stopper 23 is provided at an end of the cover frame 2 close to the opening 4, and the protruding edge 52 is cooperated with the closing stopper 23; when the moving cover 5 closes the opening 4, the protruding edge 52 abuts against the closing stopper 23, so as to limit the the movement distance of the moving cover 5.

When the moving cover 5 slides and opens, and the protruding edge 52 abuts against the opening stopper 22, further sliding and closing of the moving cover 5 is limited, which indicates that the moving cover 5 has been fully opened. When the moving cover 5 slides and closes, and the protruding edge 52 abuts against the closing stopper 23, further sliding and closing of the moving cover 5 is limited, which also indicates that the moving cover 5 has been effectively closed.

In some embodiments, reinforcing ribs are provided at the opening stopper and the closing stopper.

An end of the fixing cover 3 close to the opening 4 extends upward to form a first abutting edge, an end of the moving cover 5 close to the fixing cover 3 extends downward to form a second abutting edge, and the first abutting edge 31 is coordinately arranged with the second abutting edge 53. When the moving cover 5 moves away from the fixing cover 3, and the moving cover 5 closes the opening 4, the first abutting edge 31 abuts against the second abutting edge 53, thereby limiting the moving cover 5 to separate from the fixing cover 3.

In this embodiment, in a horizontal direction, a height of the moving cover 5 is a first height h1, a height of the fixing cover 3 is a second height h2, wherein h1 is greater than h2. That is, a horizontal height of the moving cover 5 is higher than that of the fixing cover 3.

An extending edge 41 is formed by extending downward at the opening 4, a first clamping portion 54 is formed by extending upward at the moving cover 5, and the first clamping portion 54 is matched with an outer wall of the extending edge 41.

A second clamping portion 55 is formed by extending upward at the moving cover 5, and the second clamping portion 55 is cooperated with an inner wall of the extending edge 41.

In this embodiment, a protruding edge 52 is formed by extending outward at the second clamping portion 55.

Through the cooperation of the first clamping portion 54 and the second clamping portion 55 with the extending edge 41, the left and right shakes of the moving cover 5 are restricted in the process of movement.

An inner wall on an end of the opening 4 away from the fixing cover 3 extends toward a direction of the opening to form a sealing edge 42.

An end of the moving cover 5 away from the fixing cover 3 extends downward to form a forcing portion 50.

The protruding portion 21 is a protruding strip, and the protruding strip is extended and arranged along opening and closing directions of the moving cover.

In some embodiments, the protruding strip includes a first protruding strip and a second protruding strip, the first protruding strip is at an end away from the opening, and the second protruding strip is at an end close to the opening. When the moving cover is moved to an open state, the first protruding strip and the second protruding strip extend into the chute 51 respectively to cooperate with the chute; when the moving cover is moved to a closed state, the second protruding strip extends into the chute to cooperate with the chute. At this time, the first protruding strip does not extend into the chute because the moving cover is moved close to the opening.

In some embodiments, the protruding strip is at a side close to the opening 4 and extends in a direction of the opening.

The cover body further includes an installation structure 6, which is arranged on the cover frame 2, and the installation structure 6 is used for connecting the cover frame 2 with the storage box detachably.

The cover body 1 is detachably connected to the storage box through the installation structure 6, which is convenient for mounting and disassembly, and the connection between the cover body 1 and the storage box is strong.

The storage box includes gastronorm pan and so on.

The installation structure 6 includes a fastening assembly 61 and a matching assembly 62. The fastening assembly 61 is cooperated with the matching assembly 62 for fastening installation, and a fastening slot 63 is formed between the fastening assembly 61 and the matching assembly 62.

An upper edge of the opening of the storage box extends into the fastening slot 63, so the opening edge of the storage box is fastened by the fastening assembly 61 and the matching assembly 62.

The fastening assembly 61 includes a plurality of fasteners, which are located at outer edges of the cover frame, and fastening portions of the fasteners extend towards the fastening positions.

In this embodiment, the fastening assembly 61 includes four fasteners, namely a first fastener 611, a second fastener 612, a third fastener 613 and a fourth fastener 614.

In this embodiment, the cover body is square. In this embodiment, the four fasteners are respectively arranged at four corners of the cover frame, and the cover frame extends downward to form the fasteners.

The matching assembly 62 includes a protruding member, and the protruding member protrudes from an inner edge of the cover frame towards the fastening position.

In this embodiment, the cover body is square. The cover frame 2 includes a first cover edge 201, a second cover edge 202, a third cover edge 203 and a fourth cover edge 204. The cover frame 2 is formed by connecting the first cover edge 201, the second cover edge 202, the third cover edge 203 and the fourth cover edge204, and a length of the second cover edge 202 and the fourth cover edge 204 is greater than a length of the first cover edge 201 and the third cover edge 203.

In this embodiment, the matching assembly 62 includes four protruding members, namely a first protruding member 621, a second protruding member 622, a third protruding member 623 and a fourth protruding member 624. The first protruding member 621 and the second protruding member 622 are arranged on the first cover edge 201, and the first protruding member 621 is near the first fastener 611, and the second protruding member 622 is near the second fastener 612.

The third protruding member 623 and the fourth protruding member 624 are arranged on the third cover edge 203, and the third protruding member 623 is near the third fastener 613, and the fourth protruding member 624 is near the fourth fastener 614.

The above preferred embodiments should be regarded as an example of the embodiments of the present invention, and any technical deductions, replacements, improvements, etc. that are identical, similar, or based on the present invention should be regarded as the protection scope of the present invention.

## Claims

1. A food storage cover, comprising a cover body (1), wherein the cover body (1) includes a cover frame (2), a through-hole (20) is formed inside the cover frame (2), an edge at an end of the cover frame (2) extends toward the through-hole (20) to form a fixing cover (3),
an opening (4) is formed between the fixing cover (3) and an edge at another end of the cover frame (2), a moving cover (5) is provided at the opening (4); the moving cover (5) is configured to move close to or away from the fixing cover (3) within the cover frame (2) for opening or closing the opening (4),
a protruding portion (21) protrudes from the cover frame (2), a chute (51) is provided on an outer wall of the moving cover (5), and the protruding portion (21) protrudes into the chute (51); when the moving cover (5) is moved to open or close the opening (4), the protruding portion (21) cooperates with the chute (51) for guiding the moving cover (5) to slide.

2. The food storage cover according to claim 1, wherein an opening stopper (22) is provided at the cover frame (2), the moving cover (5) protrudes outward to form a protruding edge (52), when the moving cover (5) opens the opening (4), the protruding edge (52) abuts against the opening stopper (22), so as to limit a movement distance of the moving cover (5).

3. The food storage cover according to claim 2, wherein a closing stopper (23) is provided at the cover frame (2), and the protruding edge (52) is matched with the closing stopper (23); when the moving cover (5) closes the opening (4), the protruding edge (52) abuts against the closing stopper (23), so as to limit the movement distance of the moving cover (5).

4. The food storage cover according to claim 1, wherein an end of the fixing cover (3) close to the opening (4) extends upward to form a first abutting edge (31), an end of the moving cover (5) close to the fixing cover (3) extends downward to from a second abutting edge (53), the first abutting edge (31) is configured to match with the second abutting edge (53).

5. The food storage cover according to claim 1, wherein an extending edge (41) is formed by extending downward from the opening (4), a first clamping portion (54) is formed by extending upward from the moving cover (5), the first clamping portion (54) is engaged with an outer wall of the extending edge (41).

6. The food storage cover according to claim 5, wherein a second clamping portion (55) is formed by extending upward from the moving cover (5), and the second clamping portion (55) is cooperated with an inner wall of the extending edge (41).

7. The food storage cover according to claim 1, wherein an inner wall of an end of the opening (4) away from the fixing cover (3) extends toward the opening (4) to form a sealing edge (42).

8. The food storage cover according to claim 1, wherein an end of the moving cover (5) away from the fixing cover (3) extends downward to form a forcing portion (50).

9. The food storage cover according to claim 1, wherein the protruding portion (21) is a protruding strip, and the protruding strip is arranged and extended along the opening and closing directions of the moving cover (5).

10. The food storage cover according to claim 1, wherein the cover body (1) further includes an installation structure (6), which is arranged on the cover frame (2), and the installation structure (6) is used for connecting the cover frame (2) with a storage box.

11. The food storage cover according to claim 10, wherein the installation structure (6) includes a fastening assembly (61) and a matching assembly (62), the fastening assembly (61) the matching assembly (62) are configured to cooperate and mount with each other, and a fastening slot (63) is formed between the fastening assembly (61) and the matching assembly (62).

12. The food storage cover according to claim 11, wherein the fastening assembly (61) includes a plurality of fasteners, the fasteners are located at outer edges of the cover frame (2), and fastening portions of the fasteners extend towards the fastening slot (63).

13. The food storage cover according to claim 11, wherein the matching assembly (62) includes a protruding member, the protruding member protrudes from an inner edge of the cover frame (2) towards fastening slot (63).
